# EUROPEAN PATENT APPLICATION

(11) **EP 2 511 805 A2**
(43) Date of publication of application: **17.10.2012**
(21) Application number: 12002307.2
(22) Date of filing: 29.03.2012
(51) Int. Cl.: G06F 3/044

(54) **Touch panel and mobile terminal having the touch panel**

(30) Priority: 11.04.2011 JP 2011087006
(71) Applicant: Hosiden Corporation, Yao-shi, Osaka 581-0071 (JP)
(72) Inventor: Shimizu, Masato, Yao-shi Osaka 581-0071 (JP)
(74) Representative: Beresford, Keith Denis Lewis

(57) **Abstract**

The invention provides a touch panel T suitable for miniaturization and a mobile terminal having the touch panel. The touch panel T includes a transparent substrate 100, a plurality of first transparent electrodes 200a, and a plurality of second transparent electrodes 200b. The transparent substrate 100 has a first face 101, a second face 102, a first region 103 defining an area of each of the first and second faces 101 and 102, and a second region 104 being aligned with the first region 103 along the X direction and defining another area of each of the first and second faces 101 and 102. The first transparent electrodes 200a arc arranged on the first region 103 of the first face 101 of the transparent substrate 100, and the second transparent electrodes 200b are arranged so as to cross the first transparent electrodes 200a in plan position. The second region 104 of the transparent substrate 100 has an accommodating hole 110 to accommodate a portion of a microphone 500.

## Description

The present invention relates to touch panels and mobile terminals having the touch panels.

Among conventional mobile terminals such as mobile telephones, Japanese Patent Application Laid-Open No. 2009-116861 discloses a mobile terminal including a touch panel, a display that faces the touch panel and externally displays visual information via the touch panel, and an audio output part such as a speaker.

In such mobile terminals, downsizing of the accommodating spaces for their parts is called for to meet the demand for larger-sized display panels without upsizing the mobile terminals. However, the above conventional mobile terminal has its sound output part disposed near the touch panel, requiring an accommodating space near the touch panel to be much larger than the external size of the sound output part. Providing an accommodating space near the touch panel tends to require extra space, causing the increased size of the mobile terminal.

In view of the above circumstances, the present invention is devised to provide a touch panel suitable for miniaturization and a mobile terminal having the touch panel.

An embodiment of a touch panel of the present invention includes a first face, a second face that is opposite the first face, a first region forming a part of a transparent substrate and defining an area of each of the first and second faces; and a second region forming a part of the transparent substrate that is aligned with the first region along a first direction. The second region defines another area of each of the first and second faces and is provided with an accommodating hole or notch to accommodate at least a portion of an electronic component. The accommodating hole or notch opens into at least one of the first and second faces. A plurality of first transparent electrodes are arranged on the first region of the transparent substrate. A plurality of second transparent electrodes is arranged so as to cross the first transparent electrodes in plan position.

In this aspect of the invention, as the electronic component can be partly accommodated in the accommodating hole or notch formed in the second region of the transparent substrate and opening into at least one of the first and second faces, the accommodating space for the electronic component can be advantageously minimized compared to a configuration in which the electronic component is disposed outside the transparent substrate. Therefore, the touch panel can be minimized in size and also in thickness.

The touch panel may further include an external connection device fastened to the transparent substrate; a plurality of first lead wires that is provided on the transparent substrate and electrically connects between the first and second transparent electrodes and the external connection device; apd a conduction line that is provided on the transparent substrate and adapted to electrically connect between the electronic component and the external connection device.

In this aspect of the invention, the conduction line for the electronic component is provided on the transparent substrate. This configuration has an advantage that the accommodating space for the electronic component can be minimized compared to a configuration in which wiring for the electronic component is additionally provided. Furthermore, the first and second transparent electrodes arc electrically connectable to the external connection device via the first lead wires, and the electronic component is electrically connectable to the external connection device via the conduction line. That is, The external connection device is shared by the first and second transparent electrodes and the electronic component, contributing to miniaturization of the touch panel compared to a case of providing an external connection device for the electronic component separately from an external connection device for the first and second transparent electrodes. Further, the electronic component can be electrically connected to the external connection device simply by forming the conduction line on the transparent substrate, advantageously simplifying the wiring work for the electronic component.

When the external connection device is fastened to the first face of the transparent substrate, the first lead wires and the conduction line may be arranged on the first face of the transparent substrate. In this aspect of the invention, as the first lead wires and the conduction line are provided on the first face of the transparent substrate, the external connection device can be easily connected to the first lead wires and the conduction line by fastening the external connection device to the first face of the transparent substrate.

The touch panel may further include a detecting electrode provided on the second region of the first face of the transparent substrate, the detecting electrode being disposed at an adjacent point, in a second direction crossing the first direction, to the accommodating hole or notch. An electrostatic capacity between the detecting electrode and a detection object may change in response to an approach of the detection object to the detecting electrode.

As the detecting electrode is provided in an adjacent point in the second direction to the accommodating hole or notch on the second region of the first face of the transparent substrate, the touch panel in this aspect of the invention has the following advantageous effects: compared to a touch panel equipped with a flexible printed circuit board provided with a detecting electrode and fastened to a cover panel, the touch panel has a decreased number of components than the flexible printed circuit board and therefore can be manufactured at a reduced cost. Further, as the detecting electrode is provided at an adjacent point in the second direction to the electronic component accommodated in the accommodating hole or notch, the touch panel can be minimized compared to a case of aligning the electronic component and the detecting electrode along the first direction.

The touch panel may further include a second lead wire to electrically connect between the detecting electrode and the external connection device. The external connection device may be fastened to the first face of the transparent substrate. The first and second lead wires and the conduction line may be arranged on the first face of the transparent substrate. In this aspect of the invention, as the first and second lead wires and the conduction line are provided on the first face of the transparent substrate, the external connection device can be easily connected to the first and second lead wires and the conduction line by fastening the external connection device to the first face of the transparent substrate.

The touch panel may further include a driving electrode and a detecting electrode. The driving electrode and the detecting electrode may be disposed in spaced relation on the second region of the first face of the transparent substrate and arranged at an adjacent point, in a second direction crossing the first direction, to the accommodating hole or notch. An electrostatic capacity between the driving electrode and the detecting electrode may change in response to an approach of a detection object to the detecting electrode and the driving electrode. This aspect of the invention may be modified to a configuration that the driving electrode is disposed at the adjacent point in the second direction to the accommodating hole or notch, and the detecting electrode is disposed at an opposite adjacent point of the accommodating hole or notch.

As the driving electrode and the detecting electrode arc arranged at the adjacent points, in the second direction crossing the first direction, to the accommodating hole or notch in the second region of the first face of the transparent substrate, the touch panel in this aspect of the invention has the following advantageous effects: compared to a touch panel equipped with a flexible printed circuit board provided with a detecting electrode and fastened to a cover panel, the touch panel of this aspect of the invention has a decreased number of components than the flexible printed circuit board and therefore can be manufactured at a reduced cost. Further, as the driving electrode and the detecting electrode are disposed at the adjacent point/poinrs in the second direction to the electronic component accommodated in the accommodating hole or notch, the touch panel can be minimized compared to a case of aligning the electronic component and the driving and detecting electrodes along the first direction.

The touch panel may further include a second lead wire to electrically connect between the detecting electrode and the external connection device, and a third lead wire to electrically connect between the driving electrode and the external connection device. The external connection device may be fastened to the first face of the transparent substrate. The first, second and third lead wires and the conduction line may be arranged on the first face of the transparent substrate. In this aspect of the invention, as the first, second and third lead wires and the conduction line are provided on the first face of the transparent substrate, the external connection device can be easily connected to the first, second and third lead wires and the conduction line by fastening the external connection device to the first face of the transparent substrate.

The touch panel may further include an insulating layer. The first and second transparent electrodes may cross each other in the first region of the first face of the transparent substrate. The insulating layer may be interposed between the first and second transparent electrodes. This aspect of the invention may be modified to a configuration that a plurality of insulating layers is provided only at intersections of the first and second transparent electrodes.

The touch panel may further include an insulating layer. The first transparent electrodes may be arranged on the first region of the first face of the transparent substrate. The second transparent electrodes may each have a plurality of electrode bodies provided on the first region of the first face of the transparent substrate, and a connecting portion disposed above or below the first transparent electrodes so as to cross an associate one of the first transparent electrodes in plan position and connect adjacent ones of the electrode bodies. The insulating layer may be interposed between the connecting portions and the first transparent electrodes, at least at intersections of the connecting portions and the first transparent electrodes.

The insulating layer may be provided on the first region of the first face of the transparent substrate so as to cover the first transparent electrodes and the electrode bodies of the second transparent electrodes. The connecting portions may be disposed on the insulating layer so as to face portions of the adjacent electrode bodies. The insulating layer may have openings passing from the portions of the electrode bodies to the connecting portions. The connecting portions may be connected to the electrode bodies via the openings.

The touch panel may further include an insulating layer provided on the first region of the first face of the transparent substrate. The first transparent electrodes may be arranged on the insulating layer. The second transparent electrodes may each have a plurality of electrode bodies provided on the insulating layer, and a connecting portion provided on the first region of the first face of the transparent substrate so as to face portions of adjacent ones of the electrode bodies and cross an associated one of the first transparent electrodes in plan position. The insulating layer may have openings passing from the portions of the electrode bodies to the connecting portions-The connecting portions may he connected to the electrode bodies via the openings.

The first transparent electrodes may be arranged on the first region of the first face of the transparent substrate. The second transparent electrodes may be arranged on the first region of the second face of the transparent substrate.

The touch panel may further include a transparent cover panel facing the first face of the transparent substrate. The cover panel may include a transparent region facing the first region of the first face of the transparent substrate, and a decorated region facing at least the second region of the first face of the transparent substrate.

The touch panel may further include an electronic component that may be at least partially accommodated in the accommodating hole or notch of the transparent substrate. The touch panel may further include a display device for externally displaying visual information via the transparent substrate. The display device may face the second face of the transparent substrate.

The mobile terminal of the present invention may have the touch panel according to one of the above aspects.

The invention will now be described by way of example only and without limitation by reference to the drawings, in which:
Fig. 1 is a diagrammatic plan view illustrating a touch panel according to an embodiment of the present invention;
Fig. 2 is a cross-sectional view of the touch panel, taken along line 2-2 of Fig- 1;
Fig. 3 is a cross-sectional view ot the touch panel, taken along line 3-3 of Fig, 1;
Fig. 4 is a diagrammatic enlarged plan view of a transparent substrate of the touch panel;
Fig. 5A is a schematic plan view of a first region of a touch panel as a first design modification;
Fig. 5B is a schematic cross-sectional view of the touch panel, taken along line 5B-5B of Fig. 5A;
Fig. 6A is a schematic plan view of a first region of a touch panel as a second design modification;
Fig. 6B is a schematic cross-sectional view of the touch panel, taken along line 6B-6B of Fig. 6A;
Fig. 7A is a schematic plan view of a first region of a touch panel as a third design modification;
Fig. 7B is a schematic cross-sectional view of the touch panel, taken along line 7B-7B of Fig. 7A;
Fig. 8A is a schematic plan view of a first region of a touch panel as a fourth design modification;
Fig. 8B is a schematic cross-sectional view of the touch panel, taken along line 8B-8B of Fig. 8A.

In the description which follows, relative spatial terms such as "top", "left", "above", "below", etc., are used for the convenience of the skilled reader and refer to the orientation of the touch panel and its constituent parts as depicted in the drawings. No limitation is intended by use of these terms, either in use of the invention, during its manufacture, shipment, custody, or sale, or during assembly of its constituent parts or when incorporated into or combined with other apparatus.

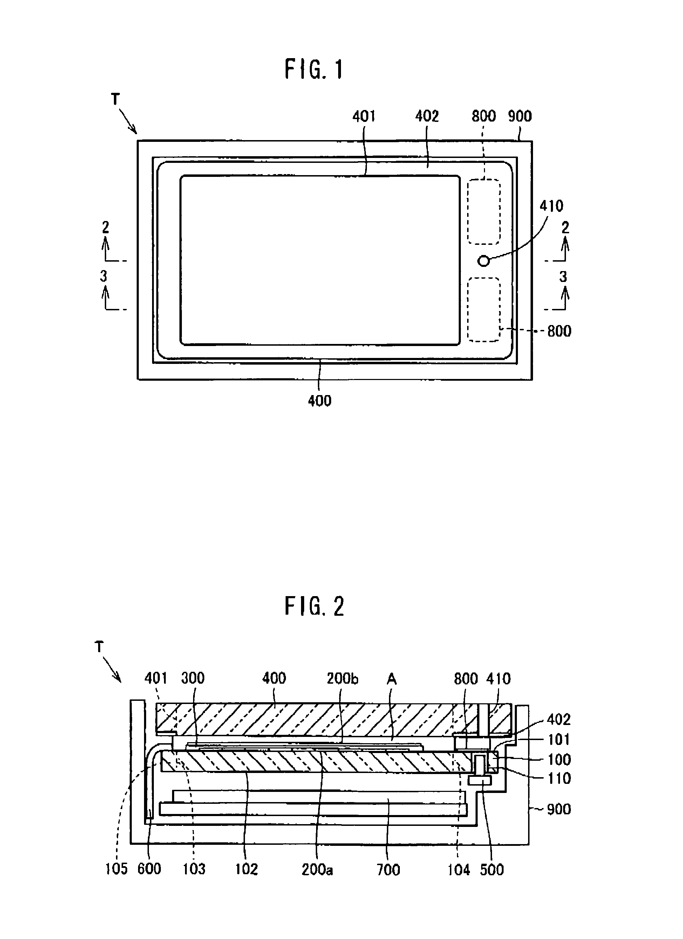

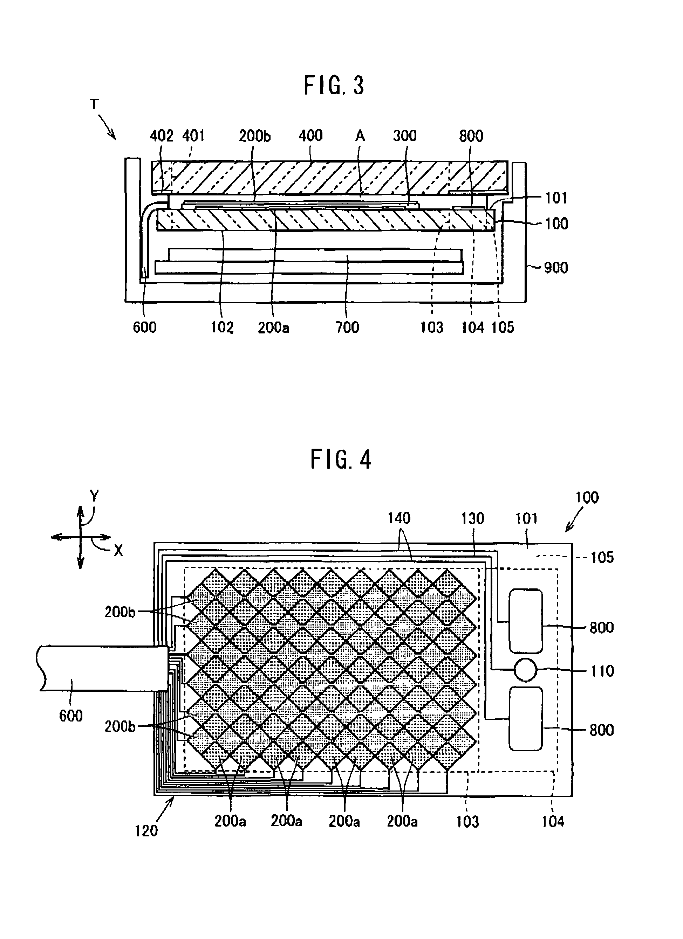

A touch panel T according to an embodiment of the present invention will be described below with reference to Fig. 1 to Fig. 4. The touch panel T is adapted to be installed in a mobile terminal, not shown. The touch panel T includes, as shown in Fig- 1 to Fig. 3, a transparent substrate 100, a plurality of first and second transparent electrodes 200a and 200b, an insulating layer 300, a cover panel 400, a microphone 500, flexible printed circuit board (hereinafter referred to as "FPC") 600, a liquid crystal display (hereinafter referred to as "LCD") 700, two detecting electrodes 800 and a housing 900. Respective elements of the touch panel T will be described in detail below. It should be appreciated that the microphone 500 corresponds to the electronic component defined in the claims; the FPC 600 corresponds to the external connection device defined in the claims; the LCD 700 corresponds to the display device defined in the claims; and the detecting electrodes 800 correspond to the detecting electrode defined in the claims. For the convenience of explanation, an X direction (first direction) and a Y direction (second direction) are indicated as "X" and "Y," respectively, in Fig. 4.

The transparent substrate 100 is generally a transparent glass substrate. The transparent substrate 100 has, as shown in Fig. 2 to Fig. 4, a first face 101, a second face 102 that is opposite the first face 101, a first region 103, a second region 104, and a peripheral region 105. The first region 103 is a region of a rectangular-parallelepiped shape in the center of the transparent substrate 100 (i.e. forms a part of the transparent substrate), defining some areas of the first and second faces 101 and 102. The second region 104 is a region of a rectangular-parallelepiped shape, adjacent in the X direction to the first region 103 of the transparent substrate 100 (i.e. forms a part of the transparent substrate that is aligned with the first region along the first direction). The second region 104 has a smaller lengthwise dimension than the first region 103. The second region 104 defines areas adjacent in the X direction to the first region 103 of the first and second faces 101 and 102. The peripheral region 105 is a frame-shaped region surrounding the first and second regions 103 and 104, defining the peripheries of the first and second faces 101 and 102.

The first transparent electrodes 200a are arranged in spaced relation along the X direction on the first region 103 of the first face 101 of the transparent substrate 100. The insulating layer 300 is disposed on the first region 103 of the first face 101 of the transparent substrate 100 to be located on top of the first transparent electrodes 200a. The second transparent electrodes 200b arc arranged in spaced relation along the Y direction on top of the insulating layer 300. In other words, the first and second transparent electrodes 200a and 200b are arranged within the first region 103 of the first face 101 of the transparent substrate 100 so as to cross each other at a right angle in plan position, i.e., forming a lattice pattern, and the insulating layer 300 is interposed between the first and second transparent electrodes 200a and 200b to prevent conduction between the first transparent electrodes 200a and the second transparent electrodes 200b. The first and second transparent electrodes 200a and 200b are made of a transparent conducting film composed of ITO (indium oxide + tin oxide), IZO (indium oxide + zinc oxide), AZO (aluminum-doped zinc oxide), conducting polymer such as PEDOT and PSS, or other materials. The first transparent electrodes 200a function as driving electrodes, while the second transparent electrodes 200b function as detecting electrodes, so that electrostatic capacities exist between the first and second transparent electrodes 200a and 200b. The insulating layer 300 may be made of any insulating material having translucency (for example, resin materials such as acrylic resin, urethane resin or epoxy resin or a silicon oxide film). For convenience of illustration, thicknesses of the first and second transparent electrodes 200a and 200b and the insulating layer 300 are exaggerated in Fig. 2 and Fig. 3.

In the center of the second region 104 of the first face 101 of the transparent substrate 100A, there is formed an accommodating hole 110 (see Fig. 4). As shown in Fig. 2, the accommodating hole 110 is a through hole passing from the first face 101 to the second face 102 through the transparent substrate 100. In other words, the accommodating hole 110 opens into both the first and second faces 101 and 102 of the transparent substrate 100. The microphone 500 may be fixed to the housing 900, the transparent substrate 100, or a circuit board of the mobile terminals, and it is partially accommodated in the accommodating hole 110. The microphone 500 may be a well-known microphone used as a sound output part of the mobile terminal. The microphone 500 may be fixed to any other thing that allows the microphone 500 partly accommodated in the accommodating hole 110 to be fixed thereto.

On both adjacent sides in the Y direction of the accommodating hole 110 in the second region 104 of the first face 101 of the transparent substrate 100, there are provided the detecting electrodes 800 as shown in Fig. 4. The detecting electrodes 800 are made of a transparent conducting film composed of ITO (indium oxide + tin oxide), IZO (indium oxide + zinc oxide), AZO (aluminum-doped zinc oxide), conducting polymer such as PEDOT and PSS, or other materials. For convenience of illustration, the thickness of the detecting electrodes 800 is exaggerated in Fig. 2 and Fig. 3.

The peripheral region 105 of the first face 101 of the transparent substrate 100 is provided with the FPC 600. Particularly, the FPC 600 is fastened onto the left end (in Fig. 4) of this peripheral region 105. This peripheral region 105 is also provided with a plurality of first lead wires 120, a plurality of conduction lines 130 (shown as a line) and a plurality of second lead wires 140. The first lead wires 120 may be made of the same material as that of the first and second transparent electrodes 200a and 200b or may be of any electrically conductive material such as a conductive metal material. The first lead wires 120 electrically connect between the first and second transparent electrodes 200a and 200b and the FPC 600. the conduction lines 130 are made of a material having electrical conductivity. The conduction lines 130 electrically connect between the microphone 500 and the FPC 600- The second lead wires 140 may be made of the same material as that of the detecting electrodes 800 or may be of any electrically conductive material such as a conductive metal material.

The second lead wires 140 electrically connect between the detecting electrodes 800 and the FPC 600. The FPC 600 is connected to a control section etc. of the mobile terminal.

The cover panel 400 is affixed to the first face 101 of the transparent substrate 100 with a transparent adhesive material A- The cover panel 400 is a transparent glass substrate whose external size is larger than that of the transparent substrate 100. The cover panel 400 has a transparent region 401 to face the first region 103 of the transparent substrate 100, and a decorated region 402 of a frame-like shape. The decorated region 402 is an outer region of the transparent region 401 of the cover panel 400. The decorated region 402 has its inner face printed with black ink or the like. The decorated region 402 faces and covers the second region 104 and the peripheral region 105 of the transparent substrate 100. As shown in Fig. 2, the decorated region 402 has an audio hole 410 passing therethrough in its thickness direction. Facing the accommodating hole 110 of the transparent substrate 100, the audio hole 410 conducts sound signals outputted from the microphone 500 to the outside. It should be noted that the transparent adhesive material A is not applied in the area between the audio hole 410 and the accommodating hole 110.

When a finger (detection object) of a user touches a point of the outer surface of the transparent region 401 of the cover panel 400, the electrostatic capacity between the first and second transparent electrodes 200a and 200b closest to the finger changes in response to the approach of the finger (i.e., the electrostatic capacity decreases). The control section detects the change in the electrostatic capacity to specify where the finger is located. In short, the touch panel T uses a mutual capacity method to detect the position of the finger.

When a finger touches a point above a detecting electrode 800 of the outer surface of the decorated region 402 of the cover panel 400, the electrostatic capacity is generated between the detecting electrode 800 and the finger. The control section detects the change in electrostatic capacity and thereby detects a touch input into the detecting electrode 800.

The LCD 700 may be a well-known liquid crystal display device, such as a simple-matrix liquid crystal display device (such as one adopting an STN system or a DSTN system) and an active-matrix liquid crystal display device (such as one adopting a TFT system and the like). As shown in Fig. 2 and Fig. 3, the LCD 700 is disposed to face the second face 102 of, the transparent substrate 100, and it can externally display visual information via the first region 103 of the transparent substrate 100 and the transparent region 401 of the cover panel 400.

The housing 900 is a box with an open top, as shown in Fig. 2 and Fig. 3. The housing 900 houses the transparent substrate 100, the first and second transparent electrodes 200a and 200b, the insulating layer 300, the cover panel 400, the microphone 500, the FPC 600, the LCD 700 and the detecting electrodes 800. The housing 900 is provided with a stepped portion that supports ends of the transparent substrate 100 and the cover panel 400. The open top of the housing 900 is covered with the cover panel 400.

The touch panel T having the above constitution may be assembled in the steps described below. By way of example, descriptions arc given on a touch panel including the first and second transparent electrodes 200a and 200b and the detecting electrodes 800 made of ITO and the first and second lead wires 120 and 140 and conduction lines 130 made of conductive metal.

The first step is to prepare the transparent substrate 100 with no accommodating hole 110 formed. An ITO film is formed on the first face 101 of the transparent substrate 100 and goes through a patterning process using a publicly-known method, so as to form the first transparent electrodes 200a on the first region 103 of the first face 101 and the detecting electrodes 800 on the second region 104 of the first face 101 . Thereafter, the insulating layer 300 is printed on the first region 103 of the first face 101 of the transparent substrate 100 so as to cover the first transparent electrodes 200a. Thereafter, an ITO film is formed on the insulating layer 300 and goes through a patterning process using a publicly-known method, so as to form the second transparent electrodes 200b on the insulating layer 300. Thereafter, conductive metal is provided, by printing or other method, on the peripheral region 105 of the first face 101 of the transparent substrate 100, so as to form the first lead wires 120, the conduction lines 130 and the second lead wires 140. This establishes electrical connections between the first lead wires 120 and the first and second transparent electrodes 200a and 200b, and between the second lead wires 140 and the detecting electrodes 800. Thereafter, the accommodating hole 110 is made at a point between the two detecting electrodes 800 in the second region 104 of the transparent substrate 100. Alternatively, the first lead wires 120, the conduction lines 130 and the second lead wires 140 may be created before forming the first and second transparent electrodes 200a and 200b and the insulating layer 300.

Thereafter, the FPC 600 is attached with an adhesive onto an end of the first face 101 of the transparent substrate 100. At this time, the FPC 600 is connected to the first lead wires 120, the conduction lines 130 and the second lead wires 140 on the first face 101 of the transparent substrate 100.

The next step is to prepare the cover panel 400, in which the decorated region 402 already has decorative printing. The surface of the cover panel 400 to face the transparent substrate is affixed to the first face 101 of the transparent substrate 100 with the transparent adhesive material A. The microphone 500 is then inserted partially into the accommodating hole 110 from a side of the second face 102 of the transparent substrate 100, and in this state the microphone 500 is fastened to the housing 900, the transparent substrate 100 or the circuit board. At this time, the microphone 500 is connected to the conduction lines 130. The transparent substrate 100, the first and second transparent electrodes 200a and 200b, the insulating layer 300, the cover panel 400, the microphone 500, the FPC 600, the LCD 700 and the detecting electrodes 800 are housed in the housing 900- Alternatively, the cover panel 400 may be affixed to the transparent substrate 100 after the microphone 500 is inserted partially into the accommodating hole 110 of the transparent substrate 100, fastened to the transparent substrate 100 and connected to the conduction lines 130.

In the above described touch panel T, the microphone 500 is accommodated partially in the accommodating hole 110 formed in the second region 104 of the transparent substrate 100. This configuration has an advantage that the accommodating space for the microphone 500 in the touch panel T can be minimized compared to a configuration that the microphone 500 is disposed outside the transparent substrate 100. As a result, the touch panel T can be minimized in size and also in thickness. Further, the conduction lines 130 for the microphone 500 are provided on the peripheral region 105 of the first face 101 of the transparent substrate 100. This configuration has an advantage that the accommodating space for the microphone 500 can he minimized compared to a configuration that wiring for the microphone 500 is additionally provided. The touch panel 1' can be minimized also in this respect. Further, the detecting electrodes 800 for detecting a touch input are provided in free spaces on both adjacent sides in the Y direction of the accommodating hole 110 in the second region 104 of the first face 101 of the transparent substrate 100. This configuration has an advantage that the touch panel T including the detecting electrodes 800 can be minimized in size and in the number of its components.

Further advantageously, the first lead wires 120 for the first and second transparent electrodes 200a and 200b, the conduction lines 130 for the microphone 500 and the second lead wires 140 for the detecting electrodes 800 are formed on the first face 101 of the transparent substrate 100 and connected to the FPC 600 fastened to the first face 101. That is to say, the FPC 600 is shared as an external connection device by the first and second transparent electrodes 200a and 200b, the microphone 500 and the detecting electrodes 800. Such sharing contributes to minimization of the touch panel T compared to a case of individually providing external connection devices for the first and second transparent electrodes 200a and 200b, the microphone 500 and the detecting electrodes 800. The shared FPC 600 can be connected to the first and second lead wires 120 and 140 and the conduction line 130 in a collective manner. Further, the microphone 500 can be electrically connected to the FPC 600 simply by forming the conduction lines 130 on the first face 101 of the transparent substrate 100, simplifying the wiring work for the microphone 500 compared to a case of additionally providing a wiring for the microphone 500. As a result, the touch panel T can be manufactured at a reduced cost. Also, as the microphone 500 is accommodated partially in the accommodating hole 110 of the transparent substrate 100, the decorated region 402 of the cover panel 400 can be made smaller than a case where the microphone is disposed near the transparent substrate.

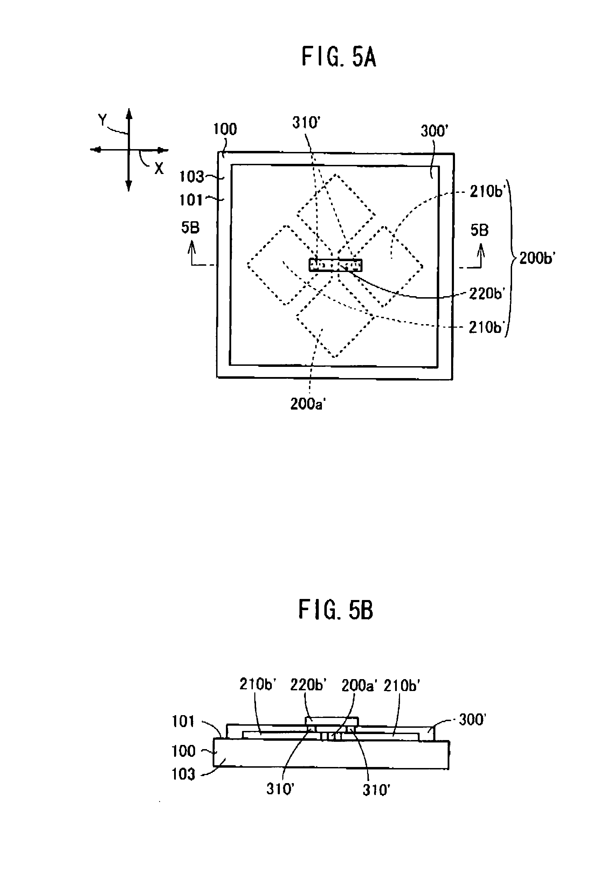

The touch panel T of the invention is not limited to the above embodiment but may be modified within the scope of claims. The modifications of the invention will be described in detail below, referring to Figs. 5A to 8B. The X and Y directions arc illustrated also in Figs. 5A, 6A, 7A and 8A.

The first and second transparent electrodes of the invention are not limited to the first and second transparent electrodes 200a and 200b according to the above embodiment as arranged on the first region 103 of the first face 101 of the transparent substrate 100 so as to cross each other at a right angle in plan position. The first and second transparent electrodes may be modified in any manner as long as the plurality of first transparent electrodes is provided on the first region of the transparent substrate and the plurality of second transparent electrodes is arranged so as to cross the first transparent electrodes in plan position.

Figs. 5A and 5B illustrate a modified touch panel with second transparent electrodes 200b' partially provided on the tirst region 103 of the first face 101 of the transparent substrate 100. In this modification, the second transparent electrodes 200b' each have a plurality of electrode bodies 210b' of rhombic shape (two of them arc shown) and oblong connecting portions 220b' (shortcut portion; one of them is shown) to connect the adjacent electrode bodies 210b'- First transparent electrodes 200a' are arranged on the first region 103 of the first face 101 of the transparent substrate 100 similarly to the above embodiment. The adjacent electrode bodies 21 Oh' are arranged in spaced relation along the X direction on both sides of the first transparent electrodes 200a'. An insulating layer 300' is provided on the first region 103 of the first face 101 of the transparent substrate 100 and covers the first transparent electrodes 200a' and the electrode bodies 210b'. The connecting portions 220b' arc provided on the insulating layer 300' so as to cross the first transparent electrodes 200a' in plan position and face portions of the adjacent electrode bodies 210b'. The insulating layer 300' has openings 310' between the connecting portions 220b' and the said portions of the electrode bodies 210b'. The openings 310' are filled with an electrically conductive material. The conductive material in the openings 310' connects the connecting portions 220b' to the associated electrode bodies 210b'. In short, the connecting portions 220b' connect the adjacent electrode bodies 210b' via the conductive material in the openings 310'.

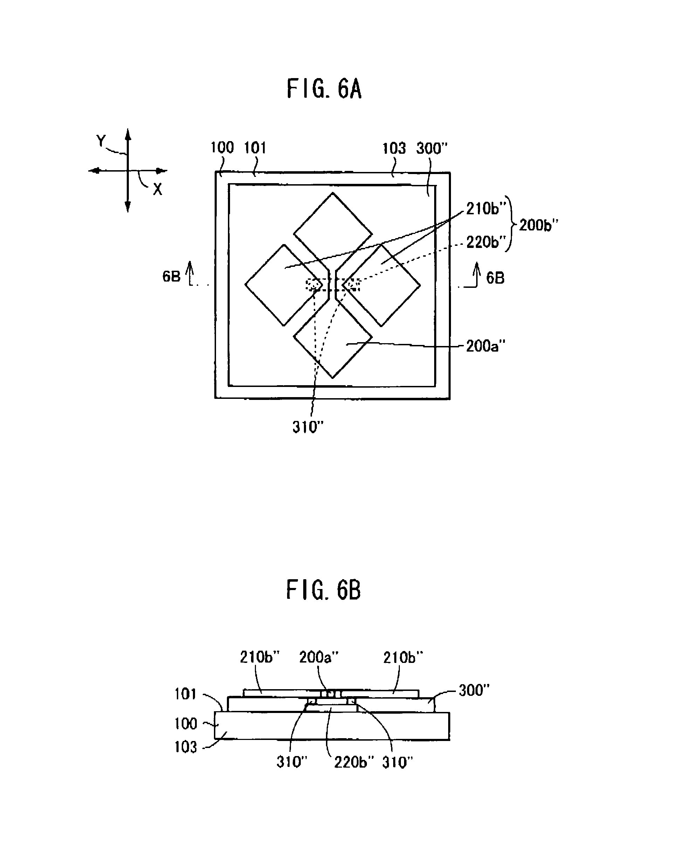

Figs. 6A and 6B illustrate another modified touch panel, wherein instead of the electrode bodies 210b', connecting portions 220h" (shortcut portions) of second transparent electrodes 200b" are disposed on the first region 103 of the first face 101 of the transparent substrate 100. In this modification, the second transparent electrodes 200b" each include a plurality of electrode bodies 210b" of rhombic shape (two of them are shown) and an oblong connecting portions 220b" (one of them is shown) to connect the adjacent electrode bodies 210b". An insulating layer 300" is provided on the first region 103 of the first face 101 of the transparent substrate 100 so as to cover the connecting portions 220b". First transparent electrodes 200a' are arranged on the insulating layer 300", in spaced relation along the X direction. The adjacent electrode bodies 210b" arc arranged on the insulating layer 300", in spaced relation along the X direction and on both sides of the first transparent electrodes 200a". The connecting portions 220b" cross the first transparent electrodes 200a" in plan position and face portions of the adjacent electrode bodics 210b". The insulating layer 300" has openings 310" between the connecting portions 220b" and the said portions of the electrode bodies 210b". The openings 310" are filled with an electrically conductive material. The conductive material in the openings 310" connects the connecting portions 220b" to the associated electrode bodies 210b". In short, the connecting portions 220b" connect the adjacent electrode bodies 210b" via the conductive material in the openings 310".

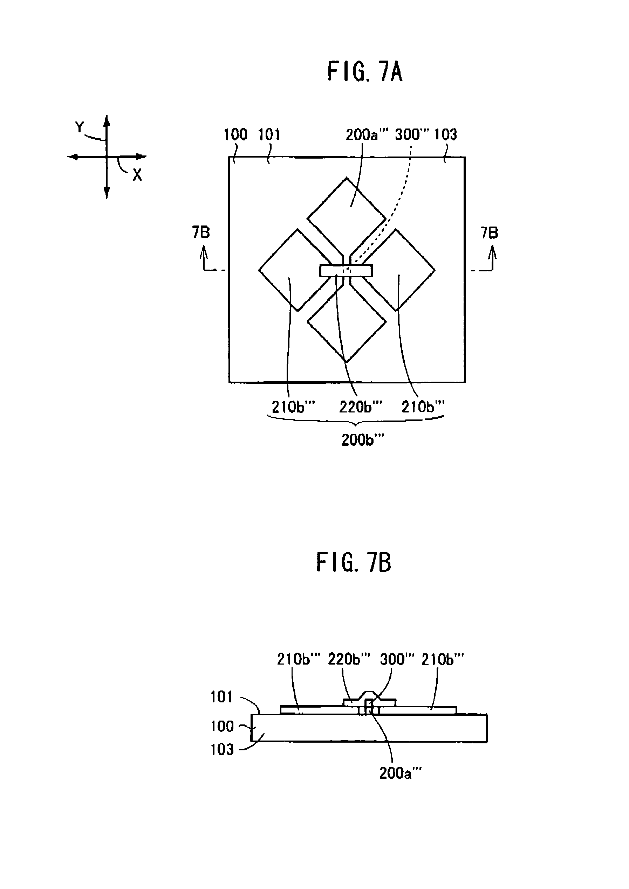

The insulating layer of the invention is not limited to the insulating layer 300 according to the above embodiment as being provided throughout the first region 103 of the first face 101 of the transparent substrate 100. For example, the insulating layer 300 may be a plurality of insulating layers interposed between the first and second transparent electrodes 200a and 200b only at the intersections of the first and second transparent electrodes 200a and 200b. Figs. 7A and 7B illustrate still another modified touch panel, wherein a plurality of insulating layers 300"' is interposed between connecting portion 220b"' (short-cut portions) of second transparent electrodes 200b"' and first transparent electrodes 200a"' only at intersections of the connecting portion 220b"' and the first transparent electrodes 200a"'. In this case, the second transparent electrodes 200b"' each have a plurality of electrode bodies 210b'" of rhombic shape and oblong connecting portions 220b"' to connect the adjacent electrode bodies 210b"'. The first transparent electrodes 200a"' are arranged on the first region 103 of the first face 101 of the transparent substrate 100 similarly to the above embodiment. The electrode bodies 210b"' arc arranged in spaced relation along the X direction and on both sides of the first transparent electrodes 200a"'. The connecting portion 220b"' are arranged above the first transparent electrodes 200a"' so as to cross the first transparent electrodes 200a"' in plan position and connect the adjacent electrode bodies 210b"'.

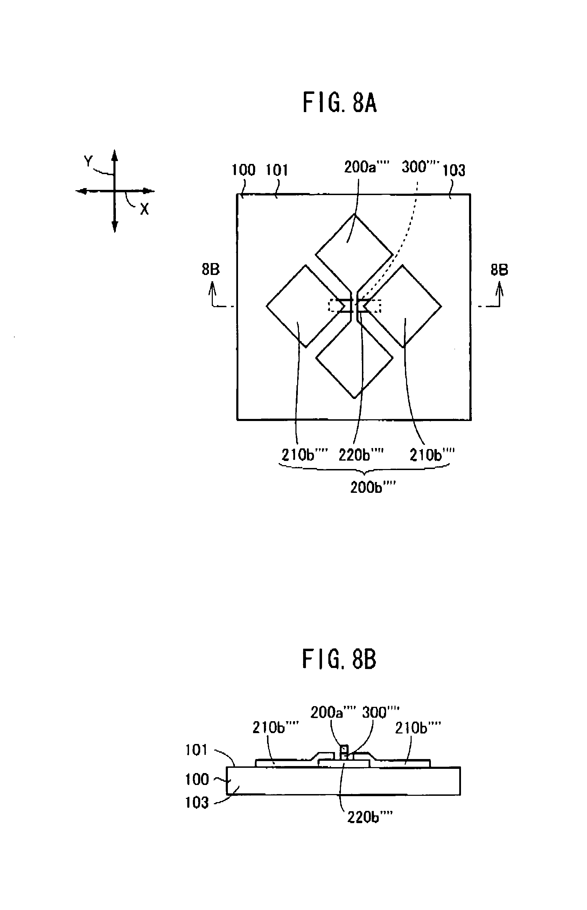

Figs. 8A and 8B illustrate another modified touch panel, wherein connecting portions 220b"" (short-cut portions) arc arranged not above first transparent electrodes 200a"" but below (i.e., on the first region 103 of the first face 101 of the transparent substrate 100) so as to cross the first transparent electrodes 200a"" in plan position. In this modification, second transparent electrode 200b"" each include a plurality of electrode bodies 210b"" of rhombic shape (two of them arc shown) and oblong connecting portions 220b"" (one of them is shown) to connect the adjacent electrode bodies 210b"". The first transparent electrodes 200a"" arc arranged in spaced relation along the X direction, on the first region 103 of the first face 101 of the transparent substrate 100 and above the connecting portion 220b"" so as to cross the connecting portion 220b"" in plan position. The electrode bodies 210b"" are provided on the first region 103 of the first face 101 of the transparent substrate 100, arranged in spaced relation along the X direction and on both sides of the first transparent electrodes 200a"". Insulating layers 300"" are interposed between the connecting portion 220b"" of the second transparent electrodes 200b"" and the first transparent electrodes 200a"", only at intersections of the connecting portion 220b"" and the first transparent electrodes 200a"".

The insulating layer 300 may be omitted. If it is omitted, the first transparent electrodes 200a may be disposed on the first region 103 of the first face 101 of the transparent substrate 100, whereas the second transparent electrodes 200b may be disposed on the first region 103 of the second face 102 of the transparent substrate 100 so as to cross the first transparent electrodes 200a in plan position. Also, the arrangement of the first and second transparent electrodes of the invention is not limited to the above embodiment wherein the first transparent electrodes 200a are arranged in spaced relation along the X direction, and the second transparent electrodes 200b are arranged in spaced relation along the Y direction. Alternatively, the first transparent electrodes may be arranged in spaced relation along the Y direction and the second transparent electrodes may be arranged in spaced relation along the X direction. The first and second transparent electrodes may cross each other in plan position at a right angle or at any other angles.

The detection method of touching positions of the invention is not limited to the method according to the above embodiment, wherein a touch position is detected by way of a change in electrostatic capacity generated between the first and second transparent electrodes 200a and 200b (namely, the mutual capacitive sensing method). Alternatively, the invention may be modified to employ a so-called self capacitive sensing method. Particularly, when a finger of a user touches an outer surface of the cover panel 400, electrostatic capacities are generated between the finger and the first transparent electrode 200a that is the closest to the finger and between the finger and the second transparent electrode 200b that is the closest to the finger. Accordingly, the electrostatic capacities between the first and second transparent electrodes 200a and 200b that arc the closest to the finger become higher than those of the other electrodes, making it possible to identify the position of the finger.

The first lead wires, the second lead wires and the conduction lines of the invention are not limited to those according to the above embodiment, wherein the first lead wires 120, the conduction lines 130 and the second lead wires 140 are provided on the first face 101 of the transparent substrate 100. The first lead wires, the second lead wires and/or the conduction lines may be provided on the second face of the transparent substrate. For example, if the second transparent electrodes are provided on the second face of the transparent substrate as discussed above, the first lead wires for the first transparent electrodes may be formed on the first face of the transparent substrate, and the first lead wires for the second transparent electrodes may formed on the second face of the transparent substrate. When the first lead wires, the second lead wires and the conduction lines are provided on the first and second faces of the transparent substrate in any possible combinations, there may be more than one FPC fastened to the first and second faces of the transparent substrate, and each of the FPCs may be connected to the first lead wires, the second lead wires and/or the conduction lines.

The detecting electrodes of the invention are not limited to ones according to the above embodiment, wherein the detecting electrodes 800 are provided on both adjacent sides in the Y direction of the accommodating hole 110 in the first face of the second region 104 of the transparent substrate 100. The detecting electrodes 800 may be omitted. Alternatively, the detecting electrodes 800 may be provided on any one of the adjacent sides, in the Y direction crossing the X direction, of the accommodating hole 110 in the first face of the second region 104 of the transparent substrate 100. Further alternatively, a driving electrode (corresponding to the driving electrode as defined in the claims) and a detecting electrode (corresponding to the detecting electrode spaced apart from the driving electrode as defined in the claims) may be provided in spaced relation, on each of the adjacent sides in the Y direction of the accommodating hole 110 in the first face of the second region 104 of the transparent substrate 100. In this case, a touch input is detected by a change in electrostatic capacity between the driving electrode and the detecting electrode in response to the approach of a detection object such as a finger. Where the detecting electrode and the driving electrode are connected to an external connection device such as the FPC 600 via a second lead wire and a third lead wire, respectively, the second and third lead wires may be provided on the first face 101 of the transparent substrate 100 similarly to the first and second lead wires 120 and 140, or they may be provided on the second face of the transparent substrate 100. The detecting electrodes 800, the detecting electrode and the driving electrode may be transparent electrodes or may be opaque electrodes. The detection object of the invention may be a finger as in the above embodiment, but it may be any other thing that can change electrostatic capacities. The detecting electrode and the driving electrode may be provided on one of the adjacent sides in the Y direction of the accommodating hole 110 in the first face of the second region 104 of the transparent substrate 100.

The electronic component of the invention is not limited to the microphone 500 according to the above embodiment. The electronic component may he a receiver, a speaker, or an input device such as a tact switch, a pointing device and a volume switch. When such input device is used as the electronic component, the cover panel may have a through hole, through which an operating portion of the input device is exposed or protruded to the outside of the cover panel. The conduction lines 130 for the microphone 500 may he provided in the peripheral region 105 of the first face 101 of the trans-parent substrate 100 as in the above embodiment, but the conduction lines may be provided in the peripheral region 105 of the second face 102 Further, the wiring for the microphone 500 may be provided separately from the ones on the transparent substrate 100. The same holds true for the case of employing an electronic component other than the microphone 500.

The external connection device of the invention is not limited to the FPC 600 according to the above embodiment. For example, the external connection device may be a pin having electrical conductivity that may be pressed into a hole of the transparent substrate 100. The external connection device of the invention may he fastened to the first face 101 of the transparent substrate 100 in a similar manner to the FPC 600 according to the above embodiment, but the external connection device may be fastened to any other place of the transparent substrate. Accordingly, the FPC 600 may be fastened to the second face 102 of the transparent substrate 100.

The transparent substrate and the cover panel of the invention are not limited to glass substrates like the transparent substrate 100 and the cover panel 400 according to the above embodiment. For example, the transparent substrate may be a transparent film or plate made of resin such as polyethylenc terephthalate (PET), polyethylene naphthalatc (PEN). The first region of the transparent substrate may be configured like the first region 103 according to the above embodiment that is a region of a rectangular-parallelepiped shape in the center of the transparent substrate 100 and defines some areas of the first and second faces 101 and 102. The first region of the invention may be modified to any configuration forming a part of the transparent substrate and defining an area of each of the first and second faces. The second region of the transparent substrate may be configure like the second region 104 according to the above embodiment that is a region of a rectangular parallelepiped shape, adjacent in the X direction to the first region 103 of the transparent substrate 100, and defines areas adjacent in the X direction to the first region 103 of the first and second faces 101 and 102. The second region of the invention may be modified to any configuration forming a part of the transparent substrate that is aligned with the first region along a first direction and defining another area of each of the first and second faces. The second region of the transparent substrate may have the accommodating hole 110 as in the above embodiment, but the second region of the invention may he modified to any configuration with an accommodating hole or notch for accommodating the electronic component at least partially. Accordingly, the accommodating hole or the notch may have such a shape as to accommodate the entire electronic component. The accommodating hole may be a through hole like the accommodating hole 110 according to the above embodiment, but it may be a bottomed hole opening into the first face or the second face of the transparent substrate. The first and second regions may be arranged in parallel as in the above embodiment, but they may be arranged in any manner as long as they are different regions of the transparent substrate. The first and second regions may be aligned along the X direction with another region interposed therebetween.

The cover panel of the invention is not limited to the cover panel 400 adhered to the transparent substrate 100 with the transparent adhesive material A according to the above embodiment. For example, the cover panel may be a panel of an electronic device to install the touch panel of the invention. In this case, the touch panel does not require the cover panel. The cover panel may have a decorated region like the decorated region 402 of the above embodiment, but the entire panel may be transparent. Further, the decorated region of the cover panel is not limited to the decorated region 402 of the cover panel 400 according to the above embodiment that faces the second region 104 and the peripheral region 105 of the transparent substrate 100, but it may be modified in any manner as long as it faces at least the second region of the transparent substrate and covers the second region. The cover panel may he disposed in any manner as long as it faces the first face of the transparent substrate.

The display device of the invention may be the LCD 700 according to the above embodiment, but it may be any other device adapted to display visual information. For example, the display device may be an organic electroluminescence display. The display device may be omitted.

The materials, shapes, sizes, numbers, arrangements, etc. of the respective elements of the touch panel T have been described by way of example only, and they may be modified in design in any manner as long as they provide similar functions. The touch panel of the invention may be installed in a mobile terminal as is the touch panel T according to the above embodiment, but it may be installed in any other electronic device than a mobile terminal, such as automated teller machines and vending machines.

### Reference Signs List

100 transparent substrate
   101 first face
   102 second face
   103 first region
   104 second region
   110 accommodating hole
   120 first lead wire
   130 conduction line
   140 second lead wire
200a first transparent electrode
200b second transparent electrode
300 insulating layer
400 cover panel
500 microphone (electronic component)
600 FPC (external connection device)
700 LCD (display device)
800 detecting electrode
900 housing

## Claims

1. A touch panel (T), comprising:
a transparent substrate (100) including:
a first face (101);
a second face (102) that is opposite the first face (101);
a first region (103) forming a part of the transparent substrate (100) and defining an area of each of the first and second faces; and
a second region (104) forming a part of the transparent substrate (100) that is aligned with the first region (103) along a first direction, the second region (104) defining another area of each of the first and second faces and being provided with an accommodating hole (110) or notch to accommodate at least a portion of an electronic component (500), the accommodating hole (110) or notch opening into at least one of the first and second faces,
a plurality of first transparent electrodes (200a) arranged on the first region (103) of the transparent substrate (100), and
a plurality of second transparent electrodes (200b) arranged so as to cross the first transparent electrodes (200a) in plan position.

2. The touch panel (T) according to claim 1, further comprising:
an external connection device (600) fastened to the transparent substrate (100);
a plurality of first lead wires (120) that is provided on the transparent substrate (100) and electrically connects between the first (200a) and second (200b) transparent electrodes and the external connection device (600); and
a conduction line (130) that is provided on the transparent substrate (100) and adapted to electrically connect between the electronic component (500) and the external connection device (600).

3. The touch panel (T) according to claim 2, wherein
the external connection device (600) is fastened to the first face (101) of the transparent substrate (100), and
the first lead wires (120) and the conduction line (130) arc arranged on the first face (101) of the transparent substrate (100).

4. The touch panel (T) according to claim 2, further comprising a detecting electrode (800) provided on the second region (104) of the first face (101) of the transparent substrate (100), the detecting electrode (800) being disposed at an adjacent point, in a second direction crossing the first direction, to the accommodating hole (110) or notch,
wherein an electrostatic capacity between the detecting electrode (800) and an object to be detected changes in response to an approach of the object to the detecting electrode (800).

5. The touch panel (T) according to claim 4, further comprising:
a second lead wire (140) to electrically connect between the detecting electrode (800) and the external connection device (600), wherein
the external connection device (600) is fastened to the first face (101) of the transparent substrate (100), and
the first (120) and second (140) lead wires and the conduction line (130) are arranged on the first face (101) of the transparent substrate (100).

6. The touch panel (T) according to claim 2, further comprising:
a driving electrode; and
a detecting electrode (800), wherein
the driving electrode and the detecting electrode (800) are disposed in spaced relation on the second region (104) of the first face (101) of the transparent substrate (100) and arranged at an adjacent point, in a second direction crossing the first direction, to the accommodating hole (110) or notch, and
an electrostatic capacity between the driving electrode (800) and the detecting electrode changes in response to an approach of an object to be detected to the driving electrode and the detecting electrode (800).

7. The touch panel (T) according to claim 6, wherein the driving electrode is disposed at the adjacent point in the second direction to the accommodating hole (110) or notch, and the detecting electrode (800) is disposed at an opposite adjacent point of the accommodating hole (110) or notch.

8. The touch panel (T) according to claim 6 or 7, further comprising:
a second lead wire (140) to electrically connect between the detecting electrode (800) and the external connection device (600); and
a third lead wire to electrically connect between the driving electrode and the external connection device (600), wherein
the external connection device (600) is fastened to the first face (101) of the transparent substrate (100),
the first (120), second (140) and third lead wires and the conduction line (130) are arranged on the first face (101) of the transparent substrate (100).

9. The touch panel (T) according to any one of claims 1 to 8, further comprising an insulating layer (300), wherein
the first (200a) and second (200b) transparent electrodes cross each other in the first region (103) of the first face (101) of the transparent substrate (100), and
the insulating layer (300) is interposed between the first (200a) and second (200b) transparent electrodes.

10. The touch panel (T) according to claim 9, wherein the insulating layer (300) comprises a plurality of insulating layers provided only at intersections of the first (200a) and second (200b) transparent electrodes.

11. The touch panel (T) according to any one of claims 1 to 8, further comprising an insulating layer (300), wherein
the first transparent electrodes (200a) are arranged on the first region (103) of the first face (101) of the transparent substrate (100),
the second transparent electrodes (200b) each have:
a plurality of electrode bodies (210b) provided on the first region (103) of the first face (101) of the transparent substrate (100), and
a connecting portion (220b) disposed above or below the first transparent electrodes (210a) so as to cross an associated one of the first transparent electrodes (200a) in plan position and connect adjacent ones of the electrode bodies (201b), and
the insulating layer (300) is interposed between the connecting portions (220b) and the first transparent electrodes (200a), at least at intersections of the connecting portions (220b) and the first transparent electrodes (200a).

12. The touch panel (T) according to claim 11, wherein
the insulating layer (300) is provided on the first region (103) of the first face (101) of the transparent substrate (100) so as to cover the first transparent electrodes (200a) and the electrode bodies (210b) of the second transparent electrodes (200b),
the connecting portions (220b) arc disposed on the insulating layer (300) so as to face portions of the adjacent electrodes bodies (210b),
the insulating layer (300) has openings (310) passing from the portions of the electrode bodies (210b) to the connecting portions (220b), and
the connecting portions (220b) are connected to the electrode bodies (210b) via the openings (310).

13. The touch panel ('I') according to any one of claims 1 to 8, further comprising:
an insulating layer (300) provided on the first region (103) of the first face (101) of the transparent substrate (100), wherein
the first transparent electrodes (200a) are arranged on the insulating layer (300),
the second transparent electrodes (200b) each have:
a plurality of electrode bodies (210b) provided on the insulating layer (300),and
a connecting portion (220b) provided on the first region (103) of the first face (101) of the transparent substrate (100) so as to face portions of adjacent ones of the electrode bodies (210b) and cross an associated one of the first transparent electrodes (200a) in plan position,
the insulating layer (300) has openings (310) passing from the portions of the electrode bodies (210b) to the connecting portions (220b), and
the connecting portions (220b) are connected to the electrode bodies (210b) via the openings (310).

14. The touch panel (T) according to claim 1 or 2, wherein
the first transparent electrodes (210a) arc arranged on the first region (103) of the first face (101) or the transparent substrate (100), and
the second transparent electrodes (210b) are arranged on the first region (103) of the second face (102) of the transparent substrate (100).

15. The touch panel (T) according to any one of claims 1 to 14, further comprising a transparent cover panel (400) facing the first face (101) of the transparent substrate (100).

16. The touch panel (T) according to claim 15, wherein the cover panel (400) includes:
a transparent region (401) facing the first region (103) of the first face (101) of the transparent substrate (100), and
a decorated region (402) facing at least the second region (104) of the first face (101) of the transparent substrate (100).

17. The touch panel (T) according to any one of claims 1 to 16, further comprising an electronic component (500) that is at least partially accommodated in the accommodating hole (110) or notch of the transparent substrate (100).
